# EUROPEAN PATENT APPLICATION

(11) **EP 4 287 492 A1**
(43) Date of publication of application: **06.12.2023**
(21) Application number: 22790999.1
(22) Date of filing: 18.04.2022
(51) Int. Cl.: H02P 3/22, H02P 3/24

(54) **DEVICE WITH MOTOR AND METHOD AND APPARATUS FOR IMPROVING SHUTDOWN NOISE THEREOF**

(30) Priority: 21.04.2021 CN 202110431079
(71) Applicant: Foshan Welling Washer Motor Manufacturing Co., Ltd., Foshan, Guangdong 528311 (CN)
(72) Inventor: SHAO, Wenqiang, Foshan, Guangdong 528311 (CN); KE, Wenjing, Foshan, Guangdong 528311 (CN); WEI, Yanyu, Foshan, Guangdong 528311 (CN)
(74) Representative: RGTH
(86) International application number: PCT/CN2022/087461
(87) International publication number: WO 2022/222891

(57) **Abstract**

This application relates to the field of motor control, and provides a method for improving a shutdown tail sound of an apparatus equipped with a motor, including steps of: cutting off, when the motor is ready to enter a shutdown mode, an external power supply and collecting a bus voltage for driving the motor according to a preset collection period; controlling, if the bus voltage is higher than or equal to a preset first threshold voltage, the motor to operate in a dynamic braking mode, to convert kinetic energy of the motor into thermal energy on motor windings; feeding, if the bus voltage is lower than or equal to a preset second threshold voltage, the kinetic energy of the motor back to a power supply terminal to increase the bus voltage at the power supply terminal of the motor, where, the first threshold voltage is higher than the second threshold voltage. The kinetic energy is enabled to be converted into electric energy when the bus voltage is lower, to increase the bus voltage. The braking function can be realized by converting the kinetic energy into the electric energy, and the operation of circuit devices can also be reliably and effectively guaranteed.

## Description

This application claims priority of the Chinese patent application No. 202110431079.3, entitled "Apparatus Equipped with Motor, and Method and Device for Improving Shutdown Tail Sound thereof' filed in the China Patent Office on April 21, 2021 the entire content of which is incorporated herein by reference.

### TECHNICAL FIELD

The present application relates to the field of motor control technologies, and in particular, to an apparatus equipped with a motor, and a method and a device for improving a shutdown tail sound of the motor-equipped apparatus.

### BACKGROUND

The high-speed motor of a vacuum cleaner, when in operation, is at a high speed. The motor will have a process of free stop after the vacuum cleaner is powered off, and this process will be accompanied by a long tail sound. The problem of tail sound can be better solved by braking. For example, the current braking mode mostly adopted is a dynamic braking mode, where windings of the motor are short-circuited by switching on a lower bridge-arm switch device, to generate a short-circuit current which enables the windings to be heated, and then the kinetic energy of the motor is converted into thermal energy, and the motor is enabled to be stopped quickly. However, for a battery-powered apparatus, such as a hand-held vacuum cleaner, after the apparatus is turned off, a battery power supply is cut off through a battery management system, and a voltage of the battery power supply drops rapidly. Problems such as an insufficient driving voltage of the power switch device or a power failure of a chip may be caused when the voltage of the battery power supply is too low, making it difficult to effectively maintain the function of braking. Especially in the case of high motor speed, a longer braking duration is required. After the braking fails, the motor enters a free shutdown mode, and the tail sound after shutdown of the apparatus cannot be effectively improved.

### TECHNICAL PROBLEM

In view of this, embodiments of the present application provide an apparatus equipped with a motor, and a method and a device for improving a shutdown tail sound of the motor-equipped apparatus, to solve the problems such as the insufficient driving voltage of the power switch device or the power failure of the chip in related arts when the shutdown tail sound is improved by means of dynamic braking, and the tail sound after shutdown cannot be effectively improved when the braking fails.

### TECHNICAL SOLUTIONS

In accordance with a first aspect of the embodiments of the present application, a method for improving a shutdown tail sound of an apparatus equipped with a motor, the method comprises steps of:
cutting off, when the motor is ready to enter a shutdown mode, an external power supply and
collecting a bus voltage for driving the motor according to a preset collection period;
controlling, if the bus voltage is higher than or equal to a preset first threshold voltage, the motor to operate in a dynamic braking mode, to convert a kinetic energy of the motor into a thermal energy on motor windings; and
feeding, if the bus voltage is lower than or equal to a preset second threshold voltage, the kinetic energy of the motor back to a power supply terminal to increase the bus voltage at the power supply terminal of the motor, where the first threshold voltage is higher than the second threshold voltage.

With reference to the first aspect, in a first possible implementation of the first aspect, the motor is connected to a direct current (DC) power supply through a three-phase inverter circuit, and the step of controlling, if the bus voltage is higher than or equal to the preset first threshold voltage, the motor to operate in the dynamic braking mode, to convert the kinetic energy of the motor into the thermal energy on the motor windings comprises:
controlling, if the bus voltage is higher than or equal to the preset first threshold voltage, a power switch on a lower bridge arm of the three-phase inverter circuit to be switched on, to enable a current generated by the kinetic energy of the motor, via a short-circuit loop constituted by the motor windings and the power switch on the lower bridge arm, to generate the thermal energy of the motor windings in the short-circuit loop.

With reference to the first aspect, in a second possible implementation of the first aspect, the motor is connected to a DC power supply through a three-phase inverter circuit, and a freewheeling diode is connected in parallel to a power switch of the three-phase inverter circuit, and the step of feeding the kinetic energy of the motor back to the power supply terminal to boost the bus voltage at the power supply terminal of the motor comprises:
controlling, the power switch in the three-phase inverter circuit to be in an off state, to enable the freewheeling diode in the three-phase inverter circuit to be constituted as a booster circuit, to boost the bus voltage of the motor.

With reference to the first aspect, in a third possible implementation of the first aspect, the second threshold voltage is higher than a voltage at a bus bar that enables a power switch of the motor to be effectively driven, or the first threshold voltage is lower than a critical voltage at the bus bar that causes damages to a drive circuit and a power supply.

In accordance with a second aspect of the embodiments of the present application, a method for improving a shutdown tail sound of an apparatus equipped with a motor is provided. The method comprises steps of:
cutting off, when the motor is ready to enter a shutdown mode, an external power supply,
obtaining a preset expected shutdown duration and determining one or more braking cycles in the expected shutdown duration;
converting, according to the set expected shutdown duration, kinetic energy of the motor into thermal energy on motor windings by means of dynamic braking during a first period of the braking cycle;
feeding, according to the set expected shutdown duration, the kinetic energy of the motor back to a power supply terminal by means of regenerative braking, to boost a bus voltage at the power supply terminal of the motor during a second period of the braking cycle.

With reference to the second aspect, in a first possible implementation of the second aspect, the method further comprises steps of:
obtaining an actual shutdown duration of the apparatus;
increasing a dynamic braking duration in the braking cycle and reducing a regenerative braking duration when the actual shutdown duration is greater than the expected shutdown duration; reducing the dynamic braking duration in the braking cycle and increasing the regenerative braking duration when the actual shutdown duration is smaller than the expected shutdown duration.

With reference to the second aspect, in a second possible implementation of the second aspect, the method further comprises:
receiving an adjustment instruction for the expected shutdown duration;
adjusting, according to the adjustment instruction of the expected shutdown duration, one or more of the dynamic braking duration, the regenerative braking duration and the braking cycle.

In accordance with a third aspect of the embodiments of the present application, a device for improving a shutdown tail sound of an apparatus equipped with a motor is provided. The device comprises: a bus voltage collection unit, a dynamic braking unit and a regenerative braking unit. The bus voltage collection unit cutting off an external power supply and collect a bus voltage for driving the motor according to a preset collection period when the motor is ready to enter a shutdown mode.

The dynamic braking unit controlling the motor to operate in a dynamic braking mode if the bus voltage is higher than or equal to a preset first threshold voltage to convert kinetic energy of the motor into thermal energy on motor windings.

The regenerative braking unit feeding back the kinetic energy of the motor to a power supply terminal if the bus voltage is lower than or equal to a preset second threshold voltage, to boost the bus voltage at the power supply terminal of the motor.

Where, the first threshold voltage is higher than the second threshold voltage.

In accordance with a fourth aspect of the embodiments of the present application, an apparatus equipped with a motor is provided, which comprises a memory, a processor, and a computer program stored in the memory and executable by the processor, and the processor when executing the computer program is configured to implement the steps of the method according to any of the embodiments in the first aspect.

In accordance with a fifth aspect of the embodiments of the present application, a computer-readable storage medium is provided, the computer-readable storage medium stores a computer program, and when the computer program is executed by a processor, the steps of the method according to any of the embodiments in the first aspect is implemented.

### BENEFICIAL EFFECTS

Compared with the conventional arts, the embodiments of the present application have the following beneficial effects: when a motor of the present application is ready to enter a shutdown mode, an external power supply is cut off, and a bus voltage that is detected is compared with a preset first threshold voltage and a preset second threshold voltage. When the voltage is higher, the kinetic energy of the motor can be converted into thermal energy through dynamic braking. When the bus voltage is lower, the kinetic energy of the motor can be converted to boost the bus voltage by means of regenerative braking, so that a driving of a power switch and a power supply of a chip can be ensured for a longer time, and the shutdown tail sound can be improved more effectively.

### BRIEF DESCRIPTION OF THE DRAWINGS

In order to illustrate technical solutions in the embodiments of the present application more clearly, the following will briefly introduce the drawings that need to be used in the description of embodiments or demonstration technologies. Obviously, the drawings in the following description are merely some embodiments of the present application. For those of ordinary skill in the art, other drawings may be obtained based on these drawings on the premise of paying no creative labor.
FIG. 1 is a schematic diagram of a system of a motor apparatus provided in an embodiment of the present application;
FIG. 2 is a schematic diagram of energy conversion of an apparatus provided in an embodiment of the present application;
FIG. 3 is a schematic diagram of an implementation process of a method for improving a shutdown tail sound of the motor-equipped apparatus provided in an embodiment of the present application;
FIG. 4 is a schematic diagram of another implementation process of the method for improving the shutdown tail sound of the motor-equipped apparatus provided in an embodiment of the present application;
FIG. 5 is a schematic diagram of yet another implementation process of the method for improving the shutdown tail sound of the motor-equipped apparatus provided in the embodiment of the present application;
FIG. 6 is a schematic diagram of a device for improving the shutdown tail sound of the motor-equipped apparatus provided in an embodiment of the present application; and
FIG. 7 is a schematic diagram of the motor-equipped apparatus provided in an embodiment of the present application.

### DETAILED DESCRIPTION OF THE EMBODIMENTS

In the following description, specific details such as specific system structures and technologies are presented for the purpose of illustration rather than limitation, to facilitate a thorough understanding of the embodiments of the present application. It will be apparent, however, to persons skilled in the art that the present application may be practiced in other embodiments without these specific details. In other instances, detailed descriptions of well-known systems, devices, circuits, and methods are omitted so as not to obscure the description of the present application with unnecessary detail.

The following specific embodiments are provided to illustrate the technical solutions described in the present application.

At present, for the motor-equipped apparatuses, comprising the commonly-used hand-held vacuum cleaners, etc., due to an extremely high speed of the motor, a large shutdown tail sound will be produced as the speed of the motor gradually decreases from high speed when the apparatus enters a shutdown mode. To overcome the defect of shutdown tail sound, the method mostly adopted at present is to convert the kinetic energy of the motor through a dynamic braking mode, so that the kinetic energy generated by the motor during operation is converted into thermal energy on the motor windings, and a brake on the speed of the motor is realized. However, when the apparatus is shut down, the voltage will drop rapidly, which may lead to an insufficient driving voltage of the power switch or a power failure of the chip, making it difficult to effectively maintain the braking function. After the adjustment of the braking function of the motor during operation is failed, the motor will also enter a free shutdown mode for a long time, which cannot effectively improve the shutdown tail sound of the motor.

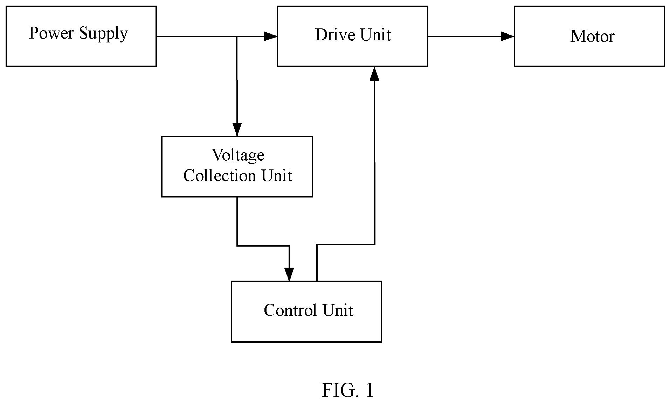

In view of the above problems, an embodiment of the present application provides an apparatus equipped with a motor and a method for improving a shutdown tail sound of the motor-equipped apparatus. FIG. 1 is a schematic diagram of a system of an apparatus equipped with a motor provided in an embodiment of the present application. The system of the motor-equipped apparatus comprises a power supply, a control unit, a voltage sampling unit, a drive unit and a motor.

In this embodiment, the power supply may be a direct current (DC) power supply, comprising, for example, a rechargeable battery. In a possible implementation, a filter capacitor is provided connected to the power supply. When the power supply is cut off, the filter capacitor at the power supply terminal may be charged by feeding back the kinetic energy of the motor rotation to a bus bar at the power supply terminal, thereby achieving the purpose of increasing a voltage at the power supply terminal.

The voltage collection unit is configured to collect a bus voltage at the power supply terminal. The bus voltage in the embodiment of the present application may be a voltage on a power supply line of the power supply on the motor apparatus side at a switch for shutdown of the apparatus. The bus voltage may be collected by a voltage sensor, or may be identified by a voltage detection circuit. The voltage detection circuit may be a voltage detection circuit composed of chips such as MIC833.

The control unit may be configured to compare the collected bus voltage with a preset voltage threshold. The preset voltage threshold may comprise a first threshold voltage and a second threshold voltage, where a voltage value of the first threshold voltage is greater than that of the second threshold voltage. In a possible implementation, the first threshold voltage is lower than the maximum safe voltage of the apparatus, and the maximum safe voltage is the bus voltage at the power supply when the drive circuit or the power supply is about to cause damages. By setting the first threshold voltage to be lower than the maximum safe voltage of the apparatus, components in the apparatus will not be damaged when the apparatus is operated in a dynamic braking mode. The voltage value of the second threshold voltage is higher than the minimum driving voltage, and the minimum driving voltage is the minimum bus voltage that can effectively drive electronic components in the apparatus to operate normally. The electronic components driven comprise power switches in apparatus, etc. By setting the voltage value of the second threshold voltage to be higher than the minimum driving voltage, the bus voltage is enabled to be boosted in time when the bus voltage is lower than the second threshold voltage, to ensure that the power switches in the apparatus can be effectively driven, and the chip will not lose power.

In a possible implementation, the control unit may also receive an adjustment instruction input by a user, and adjust the pre-stored threshold voltage according to the adjustment instruction.

The drive unit is configured to convert the power supply to enable the power supply to drive an operation of the motor. The drive unit may comprise a plurality of power switches, control ends of the power switches may be connected to the control unit, and the power switches in the drive unit may be controlled to be switched on and off through control instructions sent by the control unit.

In a possible implementation, the drive unit may be a three-phase inverter circuit. In this implementation, the three-phase inverter circuit may comprise a plurality of power switches. The plurality of power switches may be grouped according to locations, comprising a group of switches on upper bridge arms (the power switch and the corresponding freewheeling switch located at an upper part of the three-phase inverter circuit) and a group of switches on lower bridge arms (the power switch and the corresponding freewheeling switch located at a lower part of the three-phase inverter circuit).

The motor may comprise a three-phase input interface, and the three-phase input interface is in connection with motor windings in the motor. The motor windings connected to the three-phase input interface is comprised in a stator of the motor. When a magnetic rotor of the motor rotates, the rotor's magnetic field switches the motor windings in the stator, thereby converting the motor's kinetic energy into electrical energy.

When a shutdown instruction is received by the apparatus, the apparatus will cut off the voltage from the power supply, and the bus voltage for the motor will gradually drop. In the embodiments of the present application, the bus voltage is monitored, and the kinetic energy of the motor is converted in different forms according to different bus voltages, thereby a more durable and effective braking of the motor can be achieved, which further improves the shutdown tail sound of the motor.

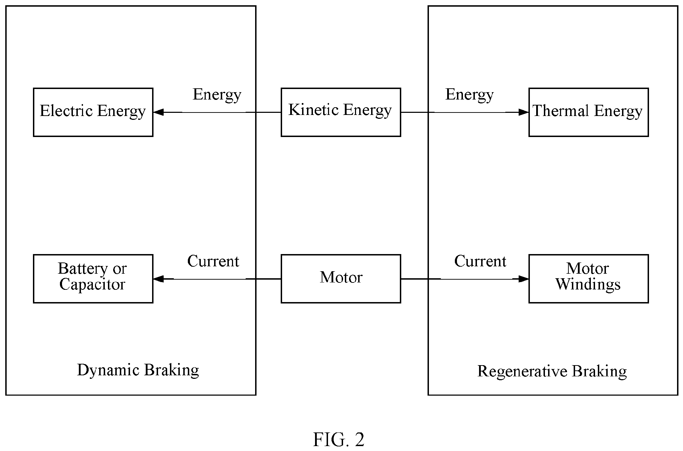

FIG. 2 shows a schematic diagram of energy conversion of the motor-equipped apparatus for improving the shutdown tail sound provided by an embodiment of the present application. As shown in FIG. 2, when the shutdown instruction is received by the apparatus, an energy conversion may be performed on the kinetic energy generated by the rotation of the motor through two ways, namely, the way of regenerative braking and the way of dynamic braking.

In this embodiment, the way of dynamic braking comprises an operation of short-circuiting the motor windings, and the motor windings, in a short-circuit loop, generate thermal energy, to realize the braking function of the motor. The method of short-circuiting the motor windings may comprise that an on-off state of the power switch in the drive circuit is adjusted to realize the short-circuiting of the motor windings. It can be understood that the present application is not limited to this, and the circuit where the motor windings is located may also be directly short-circuited by connecting other controllable switches.

In the way of regenerative braking, the electric energy converted from the kinetic energy of the motor rotation may be boosted through a booster circuit to increase the bus voltage of the motor. When boosting the electric energy, a capacitance of the bus voltage of the motor may be boosted by controlling the on-off state of the power switch in the drive unit, comprising a boost chopper circuit and the like. Alternatively, other voltage boosting circuits may be configured to boost the electric energy converted from the kinetic energy of the motor, so as to boost the bus voltage. After the bus voltage is raised, the power switch of the drive unit can be driven normally and effectively, and the chip can be prevented from power failure, so that the braking function can be effectively maintained and the shutdown tail sound of the apparatus can be improved. In this embodiment, the booster circuit may boost the voltage through a booster chip, or through a typical booster circuit.

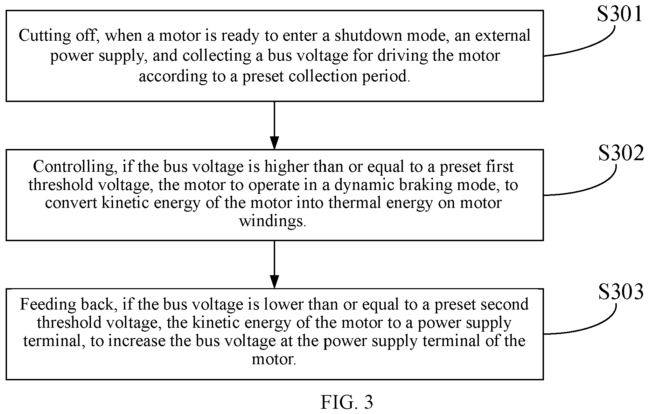

FIG. 3 is a schematic diagram of an implementation process of a method for improving a shutdown tail sound of an apparatus provided by the embodiment of the present application. The apparatus is an apparatus equipped with a motor, and the method comprises steps S301 to S303. In step S301, when the motor is ready to enter a shutdown mode, an external power supply is cut off, and a bus voltage for driving the motor is collected according to a preset collection period. In the embodiments of the present application, that when the motor is ready to enter a shutdown mode may be when a shutdown instruction is received by the apparatus, or when a shutdown is triggered by the apparatus. The shutdown instruction may comprise an apparatus shutdown instruction triggered by a shutdown button of the apparatus. Without being limited in here, the shutdown instruction may also comprise an apparatus shutdown instruction triggered when a battery power of the device drops to a preset shutdown motor. Alternatively, an apparatus shutdown instruction triggered when the apparatus is disconnected from the power source may be comprised.

The bus voltage in the embodiments of the present application may be a voltage on a power supply line of the power supply on the motor apparatus side at a switch for shutdown of the apparatus. The collection of the bus voltage may be collected by a voltage sensor, or may be identified by a voltage detection circuit. The voltage detection circuit may be a voltage detection circuit composed of chips such as MIC833.

In this step, a frequency of collecting the bus voltage, or a collection period of the bus voltage may be preset, and the collection frequency may also be adjusted according to a magnitude of the collected bus voltage. For example, the closer the bus voltage is to the first threshold voltage or the second threshold voltage, the frequency of collecting the bus voltage is correspondingly increased.

In step S302, the motor is controlled to operate in a dynamic braking mode and the kinetic energy of the motor is converted into thermal energy on the motor windings if the bus voltage is higher than or equal to a preset first threshold voltage.

In this step, the preset first threshold voltage is used to detect whether a dynamic braking is required. The dynamic braking is activated when the bus voltage is higher than or equal to the first threshold. To avoid damages to electrical devices and power supplies when dynamic braking is activated, the first threshold voltage should be lower than the maximum safe voltage, which is corresponded to the maximum bus voltage that enables the drive circuit and the power supply to operate normally. When the bus voltage is higher than the first threshold voltage, the motor is controlled to operate in the braking energy consumption mode, thereby reducing the bus voltage and avoiding damages to circuit devices and power supplies caused by an excessive bus voltage. When the motor is operated in the dynamic braking mode, the method may comprise a step of placing the motor windings in a short-circuit loop, so that the electric energy generated by the rotation of the motor is consumed in the form of heat through the motor windings in the short-circuit loop.

The forming of the short-circuit loop of the motor windings may be controlled in conjunction with the on and off of the power switch in the drive unit. For example, when the drive unit is a three-phase inverter circuit, the power switch of the lower bridge arm in the three-phase inverter circuit may be controlled to be in an on state, and the power switch of the upper bridge arm in the phase inverter circuit is controlled to be in an off state, by way of controlling the power switches in the three-phase inverter circuit, thereby enabling the power switch of the lower bridge arm and the motor windings to form a short-circuit loop.

In a possible implementation, a pin of the motor windings may also be connected to an energy-consumption switch, and when it is detected that the bus voltage is higher than the preset threshold voltage, the energy-consumption switch is controlled to be switched on, thereby enabling the motor windings to form the short-circuit loop. The current generates thermal energy through the motor windings in the short-circuit loop to achieve the conversion of kinetic energy and thermal energy, and to ensure the braking function of the motor.

In step S303, if the bus voltage is lower than or equal to a preset second threshold voltage, the kinetic energy of the motor is fed back to a power supply terminal, and increase the bus voltage at the power supply terminal of the motor.

Here, the first threshold voltage is higher than the second threshold voltage.

Here, the second threshold voltage should be higher than the minimum driving voltage, which is the voltage at the bus bar when the power switch can be driven normally. Thereby, the power switch can still be effectively driven when it is detected that the bus voltage is lower than or equal to the second threshold voltage.

The voltage of electric energy at the motor windings may be boosted by means of the boost chopper circuit when the bus voltage is lower than or equal to the preset second threshold voltage, and the boosted voltage may be used to boost the voltage at the bus, thereby enabling the power switches in the apparatus to be driven normally and effectively, and ensuring that the chip can work normally without power failure, and the braking function can be continuously and stably operated by the apparatus. At the same time, the electrical energy of the apparatus converted from the kinetic energy of the motor can be applied to charge the power supply or capacitor of the apparatus, thereby realizing the conversion of kinetic energy and electrical energy.

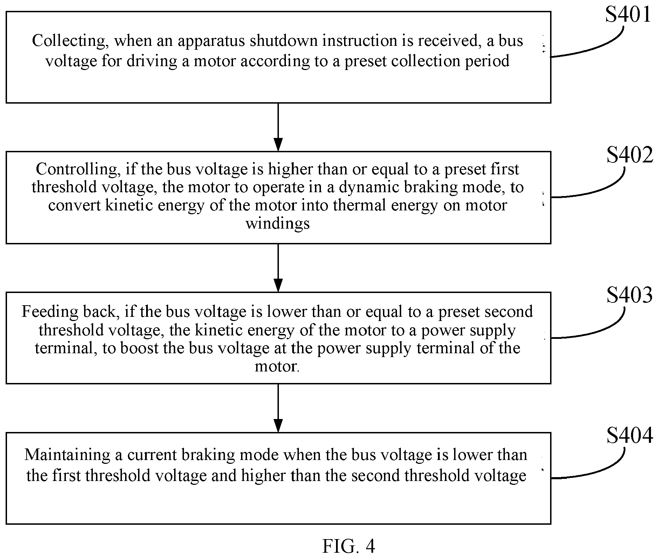

FIG. 4 is a schematic diagram of another implementation process of the method for improving the shutdown tail sound of the motor-equipped apparatus provided in an embodiment of the present application, where steps S401-S403 are basically the same as steps S301-S303 in FIG. 3, and in step S404, a current braking mode is maintained when the bus voltage is lower than the first threshold voltage and higher than the second threshold voltage.

For example, the current braking mode of the motor is the dynamic braking mode. If it is detected that the bus voltage is lower than the first threshold voltage and higher than the second threshold voltage, then the current operation mode, i.e., the dynamic braking mode, of the motor will be maintained. In this mode, the bus voltage of the motor drops slowly until the bus voltage drops to the second threshold voltage, and then the motor is switched to a regenerative braking mode to increase the bus voltage.

In case that the current braking mode of the motor is the regenerative braking mode, that is, the kinetic energy of the motor is fed back to the power supply terminal, comprising that the kinetic energy of the motor is fed back to the power supply or the capacitor at the power supply terminal, to increase the bus voltage at the power supply terminal. If it is detected that the bus voltage is lower than the first threshold voltage and higher than the second threshold voltage, then the motor is maintained to operate in the regenerative braking mode. In this mode, the bus voltage may continue to rise until the bus voltage is higher than or equal to the preset first threshold voltage, and then the motor is switched to operate in the dynamic braking mode. The brake operation of the motor is carried out continuously by detecting the bus voltage until the motor is stopped.

In the embodiments of the present application, the motor-equipped apparatus may comprise an apparatus equipped with a motor for adjusting operation, such as a hand-held vacuum cleaner.

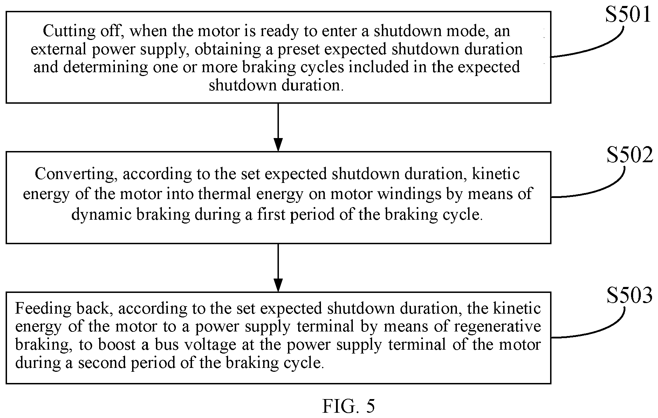

FIG. 5 is a schematic diagram of an implementation process of a method for improving a shutdown tail sound of an apparatus equipped with a motor provided in the embodiment of the present application. As shown in FIG. 5, the method comprises steps S501 to S503.

In step S501, when the motor is ready to enter a shutdown mode, an external power supply is cut off, a preset expected shutdown duration is obtained, and one or more braking cycles that are comprised in the expected shutdown duration are determined.

In the embodiments of the present application, the expected shutdown duration is an expected time from a moment the apparatus enters the shutdown mode to a moment the apparatus is shut down completely. The expected shutdown duration may be determined according to parameters such as apparatus production requirements and user requirements.

According to the obtained expected shutdown duration, the expected shutdown duration may be divided into one or more braking cycles by means of uniform division. For example, if the expected shutdown duration is 1 second, and the expected shutdown duration is divided into 10 braking cycles, then a duration of each braking cycle is that: 1 second / 10 = 100 milliseconds. The expected shutdown duration may be divided according to a preset number of braking cycles when determining the braking cycles, or the expected shutdown duration may be divided according to the duration of each braking cycle. For example, the expected shutdown duration may be divided into 15 braking cycles according to a preset duration of braking cycle of 100 milliseconds if the expected shutdown duration is 1.5 seconds.

In step S502, the kinetic energy of the motor is converted into thermal energy on of motor windings by means of dynamic braking during a first period of the braking cycle according to the set expected shutdown duration.

To enable the apparatus to complete the shutdown within the set expected shutdown duration, it may be necessary to determine a dynamic braking duration and a regenerative braking duration in each braking cycle.

Among them, the dynamic braking may be understood as converting the kinetic energy of the motor into thermal energy on the motor windings, for example, a current generated by the kinetic energy of the motor may be enabled to generate thermal energy through the motor windings. The regenerative braking may convert the kinetic energy into electrical energy at a bus bar of the motor through a boosting of the bus voltage of the motor.

Among them, the braking cycle comprises a first period and a second period. The braking cycle may be composed of a first period and a second period. In a possible implementation, a sum of duration of the first period and the second period may also be a part of the duration of the braking cycle.

In the braking cycle, through the dynamic braking in the first period, the shutdown duration of the motor can be shortened, so that the apparatus can complete the shutdown according to the set expected shutdown duration.

In S503, the kinetic energy of the motor is fed back to a power supply terminal by means of regenerative braking during a second period of the braking cycle according to the set expected shutdown duration, to boost a bus voltage at the power supply terminal of the motor.

By means of the regenerative braking, the kinetic energy of the motor may be converted into electrical energy to be fed back to the bus bar of the motor, thereby the motor's shutdown duration can be increased, so that the motor can complete the shutdown according to the set expected shutdown duration.

In the embodiments of the present application, the expected shutdown duration may be modified according to setting requirements. When the expected shutdown duration is modified, the dynamic braking duration and the regenerative braking duration in the braking cycle, the duration of the braking cycle, and the number of braking cycles may be adjusted accordingly, so as to match a shutdown duration of the apparatus with the expected shutdown duration.

During operation of the apparatus, an actual shutdown duration may not match the expected shutdown duration due to changes in the performance of the motor or circuit of the apparatus. The regenerative braking duration and dynamic braking duration in the braking cycle of the apparatus may be adjusted according to a comparison result of the collected actual shutdown duration of the apparatus and the expected shutdown duration.

For example, in the N-th shutdown process, if it is detected that the actual shutdown duration of the apparatus is longer than the expected shutdown duration, the dynamic braking duration in the braking cycle may be adjusted, and by increasing the dynamic braking duration, the actual shutdown duration in a shutdown process after the N-th shutdown duration is enabled to be reduced. For example, in a preset scheme, the braking cycle is 100 milliseconds, the dynamic braking duration is 50 milliseconds, and the regenerative braking duration is 50 milliseconds. The dynamic braking duration may be adjusted to 70 milliseconds, and the regenerative braking duration may be adjusted to 30 milliseconds when it is detected that the actual shutdown duration is longer than the expected shutdown duration. During actual use, the adjustment may be continuously updated according to the adjustment result until the adjusted actual shutdown duration matches the expected shutdown duration.

Similarly, the regenerative braking duration may be increased and the dynamic braking duration may be reduced when the actual shutdown duration is smaller than the expected shutdown duration, so as to increase the actual shutdown duration.

In a possible implementation, the actual shutdown duration may be adjusted by adjusting one of the dynamic braking duration and the regenerative braking duration.

It should be understood that the sequence numbers of the steps in the above embodiments do not indicate an order of execution, and the execution order of each process should be determined by its function and internal logic, and should not constitute any limitation to the implementation process of the embodiments of the present application.

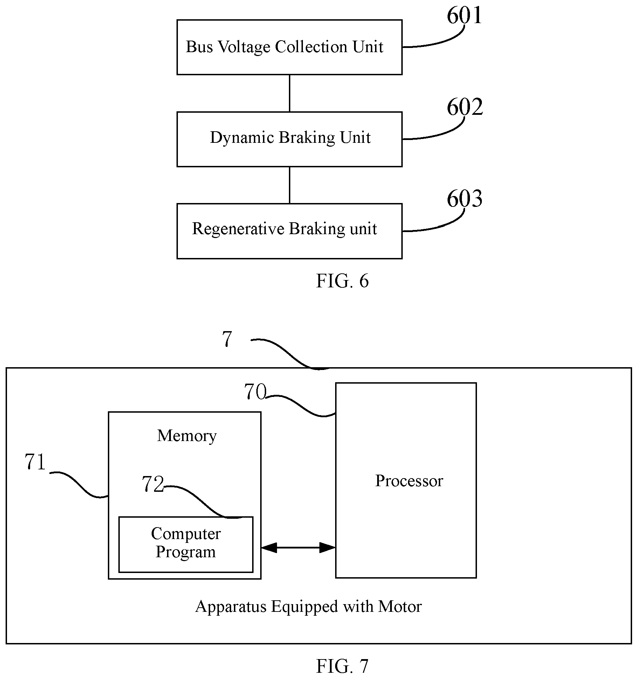

FIG. 6 is a schematic diagram of a device for improving a shutdown tail sound of an apparatus provided in an embodiment of the present application, the device comprises a bus voltage collection unit 601, a dynamic braking unit 602 and a regenerative braking unit 603.

The bus voltage collection unit 601 is configured to cut off an external power supply side power supply when a motor is ready to enter a shutdown mode, and collect a bus voltage for driving the motor according to a preset collection period.

The dynamic braking unit 602 is configured to receive the bus voltage collected by the bus collection unit, and control the motor to operate in a dynamic braking mode if the bus voltage is higher than or equal to a preset first threshold voltage, to convert kinetic energy of the motor into thermal energy on motor windings;

The regenerative braking unit 603 is configured to receive the bus voltage collected by the bus collection unit, and feed back the kinetic energy of the motor to a power supply terminal if the bus voltage is lower than or equal to a preset second threshold voltage to boost the bus voltage at the power supply terminal of the motor.

Here, the first threshold voltage is higher than the second threshold voltage.

The device for improving the shutdown tail sound of the apparatus shown in FIG. 6 corresponds to the device for improving the shutdown tail sound of the apparatus shown in FIG. 3.

FIG. 7 is a schematic diagram of an apparatus equipped with a motor provided by an embodiment of the present application. As shown in FIG. 7, the motor-equipped apparatus 7 of this embodiment comprises: a processor 70, a memory 71, and a computer program 72 stored in the memory 71 and executable by the processor 70, such as a program for improving the shutdown tail sound of the motor-equipped apparatus. When the computer program 72 is executed by the processor 70, the steps in the method embodiments for improving the shutdown tail sound of each motor-equipped device are implemented. Alternatively, when the processor 70 when executing the computer program 72, is configured to implement functions of the modules/units in the above-mentioned device embodiments.

Exemplarily, the computer program 72 may be divided into one or more modules/units, and the one or more modules/units are stored in the memory 71 and executed by the processor 70 to implement the embodiments of this application. The one or more modules/units may be a series of computer program instruction segments capable of accomplishing specific functions, and the instruction segments are used to describe the execution process of the computer program 72 in the motor-equipped apparatus 7.
the motor-equipped apparatus may comprise, but not limited to, a processor 70 and a memory 71. Those skilled in the art can understand that FIG. 7 is only an example of the motor-equipped apparatus 7, and does not constitute a limitation to the motor-equipped apparatus 7, and may comprise more or less components than those shown in this figure, or may comprise a combination of some certain components, or may comprise other different components, for example, the motor-equipped apparatus may also comprise an input-and-output device, a network access device, a bus, and the like.

The so-called processor 70 may be a central processing unit (Central Processing Unit, CPU), and may also be other general-purpose processors, a digital signal processor (Digital Signal Processor, DSP), an application specific integrated circuit (Application Specific Integrated Circuit, ASIC), a field-programmable gate array (Field-Programmable Gate Array, FPGA) or other programmable logic devices, discrete gates or transistor logic devices, discrete hardware components, etc. The general-purpose processor may be a microprocessor, or the processor may be any conventional processor, or the like.

The memory 71 may be an internal storage unit of the motor-equipped apparatus 7, such as a hard disk or a memory of the motor-equipped apparatus 7. The memory 71 may also be an external storage device of the motor-equipped apparatus 7, such as a plug-in hard disk equipped on the motor-equipped apparatus 7, a smart memory card (Smart Media Card, SMC), a secure digital (Secure Digital, SD) card, a flash card (Flash Card), etc. Further, the memory 71 may also comprise both an internal storage unit and an external storage device of the motor-equipped apparatus 7. The memory 71 is used to store the computer program and other programs and data required by the motor-equipped apparatus. The memory 71 may also be used to temporarily store data that has been output or will be output.

It can be clearly understood by those skilled in the art that the division of the above-mentioned functional units and modules is used as an example only for the convenience and simplicity of description. In practical applications, the above-mentioned function allocation may be implemented by different functional units and modules according to needs, that is, the internal structure of the device is divided into different functional units or modules, so as to complete all or part of the functions described above. Each functional unit and module in the embodiments may be integrated into one processing unit, or each unit may exist separately physically, or two or more units may be integrated into one unit, and the above-mentioned integrated units may be implemented in the form of hardware or in the form of software functional units. In addition, specific names of the functional units and modules are only for the convenience of distinguishing each other, and are not used to limit the protection scope of the present application. For specific working processes of the units and modules in the above system, reference may be made to the corresponding process in the foregoing method embodiments, and details will not be repeated here.

In the above-mentioned embodiments, the descriptions of each embodiment have their own emphases, and for parts that are not detailed or recorded in a certain embodiment, reference may be made to the relevant descriptions of other embodiments.

It can be appreciated to those skilled in the art that the units and algorithm steps of the examples described in conjunction with the embodiments disclosed herein may be implemented by electronic hardware, or a combination of computer software and electronic hardware. Whether these functions are executed by hardware or software depends on the specific application and design constraints of the technical solution. Different methods may be used by those skilled in the art to implement the described functions for each specific application, and such implementation should not be regarded as exceeding the scope of the present application.

In the embodiments provided in the present application, it should be understood that the disclosed device/terminal equipment and method may be implemented in other ways. For example, the device/terminal equipment embodiments described above are only illustrative. For example, the division of modules or units is only a logical function division. In actual implementation, there may be other division methods. For example, multiple units or components may be combined or integrated into another system, or some features may be ignored or not implemented. In another aspect, the mutual coupling or direct coupling or communication connection shown or discussed may be an indirect coupling or communication connection through some interfaces, devices or units, which may be in electrical, mechanical or other forms.

The units described as separate components may or may not be physically separated, and the components shown as units may or may not be physical units, that is, they may be located in one place, or may be distributed to multiple network units. Part or all of the units may be selected according to actual needs to fulfill the purposes of solutions of those embodiments.

In addition, each functional unit in each embodiment of the present application may be integrated into one processing unit, each unit may exist separately physically, or two or more units may be integrated into one unit. The above-mentioned integrated units may be implemented in the form of hardware or in the form of software functional units.

If the integrated module/unit is realized in the form of a software function unit and sold or used as an independent product, it may be stored in a computer-readable storage medium. Based on this understanding, all or part of the processes in the methods of the above-mentioned embodiments in the present application may also be completed by hardware related to the computer program instructions. The computer program may be stored in a computer-readable storage medium. When the computer program is executed by a processor, the steps of the above-mentioned various method embodiments can be implemented. Where the computer program comprises computer program code, and the computer program code may be in the form of source code, object code, executable file or may be in some intermediate forms. The computer-readable medium may comprise: any entity or device capable of carrying the computer program code, a recording medium, a U disk, a mobile hard disk, a magnetic disk, an optical disk, a computer memory, a read-only memory (ROM, Read-Only Memory), a random-access memory (RAM, Random Access Memory), an electrical carrier signal, a telecommunication signal, a software distribution medium, etc. It should be noted that the content contained in the computer-readable medium may be appropriately increased or decreased according to the requirements of the legislation and patent practice in the jurisdiction. For example, in some jurisdictions, according to the legislation and patent practice, the computer-readable medium does not comprise electrical carrier signals and telecommunication signals.

The foregoing embodiments are merely used to illustrate the technical solutions of the present application, rather than being intended to limit the present application. Although the present application has been described in detail with reference to the foregoing embodiments, those skilled in the art should understand that: the technical solutions described in the foregoing embodiments may still be modified, or some of the technical features may be equivalently substituted. These modifications or substitutions do not make the essence of the corresponding technical solutions deviate from the spirit and scope of the technical solutions of the various embodiments of this application, and thus should all be included within the protection scope of the present application.

## Claims

1. A method for improving a shutdown tail sound of an apparatus equipped with a motor, comprising:
cutting off, when the motor is ready to enter a shutdown mode, an external power supply and
collecting a bus voltage for driving the motor according to a preset collection period;
controlling, if the bus voltage is higher than or equal to a preset first threshold voltage, the motor to operate in a dynamic braking mode, to convert a kinetic energy of the motor into a thermal energy on motor windings; and
feeding back, if the bus voltage is lower than or equal to a preset second threshold voltage, the kinetic energy of the motor to a power supply terminal, to increase the bus voltage at the power supply terminal of the motor,
wherein the first threshold voltage is higher than the second threshold voltage.

2. The method according to claim 1, wherein the motor is connected to a direct current (DC) power supply through a three-phase inverter circuit, and said controlling, if the bus voltage is higher than or equal to the preset first threshold voltage, the motor to operate in the dynamic braking mode, to convert the a kinetic energy of the motor into the a thermal energy on the motor windings, comprises:
controlling, if the bus voltage is higher than or equal to the preset first threshold voltage, a power switch on a lower bridge arm of the three-phase inverter circuit to be switched on, to enable a current generated by the kinetic energy of the motor, via a short-circuit loop constituted by the motor windings and the power switch on the lower bridge arm, to generate the thermal energy on the motor windings in the short-circuit loop.

3. The method according to claim 1, wherein the motor is connected to a DC power supply through a three-phase inverter circuit, and a freewheeling diode is connected in parallel to a power switch of the three-phase inverter circuit, and said feeding back the kinetic energy of the motor to the power supply terminal to increase the bus voltage at the power supply terminal of the motor comprises:
controlling, the power switch in the three-phase inverter circuit to be in an off state, and
constituting a booster circuit by the freewheeling diode in the three-phase inverter circuit, to boost the bus voltage of the motor.

4. The method according to claim 1, wherein the second threshold voltage is higher than a voltage at a bus bar that can effectively drive a power switch of the motor, or the first threshold voltage is lower than a critical voltage at the bus bar that causes a damage to a drive circuit and a power supply.

5. A method for improving a shutdown tail sound of an apparatus with a motor, comprising:
cutting off, when the motor is ready to enter a shutdown mode, an external power supply,
obtaining a preset expected shutdown duration and determining one or more braking cycles in the expected shutdown duration;
converting, according to the set expected shutdown duration, a kinetic energy of the motor into a thermal energy on motor windings by means of a dynamic braking during a first period of the braking cycle;
feeding back, according to the set expected shutdown duration, the kinetic energy of the motor to a power supply terminal by means of a regenerative braking, to boost a bus voltage at the power supply terminal of the motor during a second period of the braking cycle.

6. The method according to claim 5, further comprising:
obtaining an actual shutdown duration of the apparatus;
in the braking cycle, increasing a dynamic braking duration and reducing a regenerative braking duration when the actual shutdown duration is greater than the expected shutdown duration;
in the braking cycle, reducing the dynamic braking duration and increasing the regenerative braking duration when the actual shutdown duration is smaller than the expected shutdown duration.

7. The method according to according to claim 5, further comprising:
receiving an adjustment instruction for the expected shutdown duration;
adjusting, according to the adjustment instruction of the expected shutdown duration, at least one of the dynamic braking duration, the regenerative braking duration and the braking cycle.

8. A device for improving a shutdown tail sound of an apparatus equipped with a motor, comprising:
a bus voltage collection unit, cutting off an external power supply and collecting a bus voltage for driving the motor according to a preset collection period when the motor is ready to enter a shutdown mode;
a dynamic braking unit, controlling the motor to operate in a dynamic braking mode if the bus voltage is higher than or equal to a preset first threshold voltage, to convert a kinetic energy of the motor into a thermal energy on motor windings; and
a regenerative braking unit, feeding back the kinetic energy of the motor to a power supply terminal if the bus voltage is lower than or equal to a preset second threshold voltage, to boost the bus voltage at the power supply terminal of the motor;
wherein the first threshold voltage is higher than the second threshold voltage.

9. An apparatus equipped with a motor, comprising a memory, a processor, and a computer program stored in the memory and executable by the processor, wherein, when the computer program is executed by the processor, a step of a method according to any one of claims 1 to 7 are performed.

10. A computer-readable storage medium storing a computer program, wherein when the computer program is executed by a processor, a step of a method according to any one of claims 1 to 7 are implemented.
